# EUROPÄISCHE PATENTSCHRIFT

(11) **EP 0 258 830 B1**
(45) Veröffentlichungstag und Bekanntmachung des Hinweises auf die Patenterteilung: **18.05.1994**
(21) Anmeldenummer: 87112512.6
(22) Anmeldetag: 28.08.1987
(51) Int. Cl.: G03B 13/26, G03B 13/00, G03B 11/04

(54) **Spiegelreflex-Einrichtung zur Mattscheibenbetrachtung einer photographischen Kamera**
Mirror reflex device for viewing the focussing screen of a photographic camera
Dispositif réflexe à miroir pour l'examen du verre dépoli d'une caméra photographique

(30) Priorität: 03.09.1986 CH 3532/86
(43) Veröffentlichungstag der Anmeldung: 09.03.1988
(73) Patentinhaber: Vogt, Philippe, CH-8038 Zürich (CH)
(72) Erfinder: Vogt, Philippe, CH-8038 Zürich (CH)

(56) Entgegenhaltungen:
- CH-A- 432 229
- CH-A- 443 883
- DE-C- 364 384

## Beschreibung

Die vorliegende Erfindung betrifft eine Spiegelreflex-Einrichtung zum Betrachten der Mattscheibe einer photographischen Kamera, die relativ zueinander verstellbare Objektiv- und Bildträger aufweist, wobei der Spiegel innerhalb eines am Bildträger anbringbaren Gehäuses mit einer Einblicköffnung zum Betrachten des Spiegels und einer hinter der Mattscheibe anzubringen bestimmte Lichteintrittsöffnung angeordnet ist.

In der CH-PS 432 229 ist eine Einrichtung zum Betrachten einer Mattscheibe einer Kamera beschrieben, die ein Gehäuse, einen im Gehäuse beweglich gelagerten Spiegel und ein Okular aufweist, das mit dem Spiegel so gekoppelt ist, dass das Bild auf der Mattscheibe wahlweise direkt oder über den Spiegel betrachtet werden kann. Als nachteilig hat sich erwiesen, dass sich das Bild auf der Mattscheibe dem Betrachter unterschiedlich darstellt.

Aus der CH-PS 443 883 ist eine Spiegelreflex-Einrichtung bekannt, bei der der Spiegel innerhalb eines Gehäuses schwenkbar angeordnet ist und mittels eines Betätigungsorgans von aussen her verstellbar ist. Durch diese Anordnung muss das Gehäuse zwangsläufig relativ gross sein, was ein Nachteil ist.

Hier will die Erfindung Abhilfe schaffen. Die Erfindung, wie sie im Patentanspruch 1 gekennzeichnet ist, löst die Aufgabe eine Spiegelreflex-Einrichtung zu schaffen, die eine grosse Verstellmöglichkeit bietet, bei der der Einblickwinkel Auge-Spiegel konstant bleibt und die Bildhelligkeit bei verstellter Kamera optimal ist.

Ausführungsformen der erfindungsgemässen Einrichtung sind in den abhängigen Patentansprüchen gekennzeichnet.

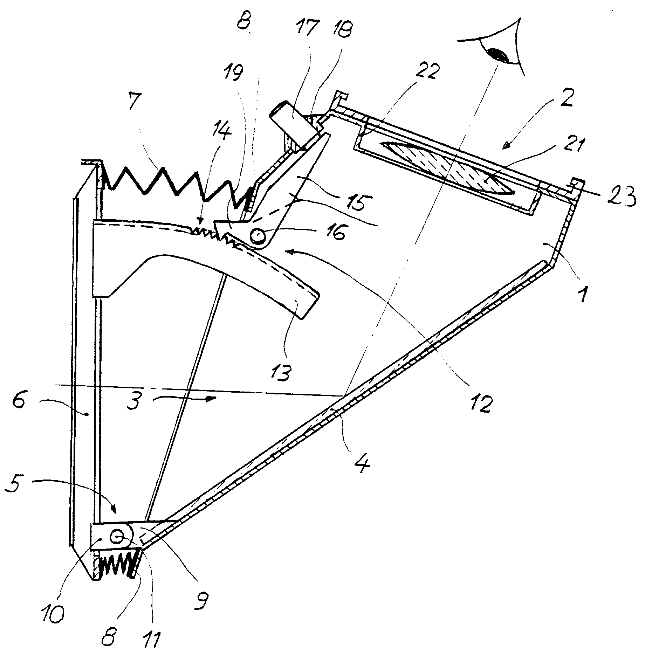

Im folgenden wird die Erfindung anhand der beiliegenden Zeichnung erläutert, die einen Schnitt durch ein Ausführungsbeispiel der Spiegelreflex-Einrichtung zeigt.

Die Spiegelreflex-Einrichtung enthält ein Gehäuse 1 mit einer Einblicköffnung 2 und einer Lichteintrittsöffnung 3, einen Spiegel 4, der an einer den beiden vorstehend genannten Oeffnungen gegenüberliegenden Wandung des Gehäuses 1 befestigt ist. Das Gehäuse 1 ist einerseits mittels einer Scharniervorrichtung 5 schwenkbar mit einem Halterahmen 6 und andererseits durch einen Balg 7 mit diesem verbunden. Der Halterahmen 6 ist derart ausgebildet, dass er auf den nicht dargestellten Mattscheibenrahmen einer Kamera aufsteckbar ist. Es wird hier daraufhingewiesen, dass der Halterahmen auch auf andere Weise am Mattscheibenrahmen befestigt werden kann. Die Lichteintrittsöffnung 3 wird durch Randabschnitte 8 des Gehäuses 1 bestimmt, wobei diese Randabschnitte gleichzeitig für die Befestigung des Balges 7 dienen.

Die Scharniervorrichtung 5 enthält zwei Scharnierbänder 9,10, die am Gehäuse 1 bzw. am Halterahmen 6 befestigt sind und einen Scharnierstift 11 und ist innerhalb des Balges 7 angeordnet.

Zur Betrachtung des Mattscheibenbildes ist eine Verstellung des Gehäuses 1 erforderlich. Hierzu ist mindestens eine Verstellvorrichtung 12 vorgesehen, die seitlich der Lichteintrittsöffnung 3 so angeordnet ist, dass der Spiegel 4 bezüglich dem Halterahmen 6 und somit der nicht dargestellten Mattscheibe verschwenkbar ist. Die Verstellvorrichtung enthält ein Verstellsegment 13, das am Halterahmen 6 freistehend befestigt ist und eine Verzahnung 14 aufweist, ein Verriegelungsorgan 15, das um eine Achse 16 schwenkbar im Gehäuse 1 angeordnet ist und ein Betätigungsorgan 17, das in einer Führungsbuchse 18 am Gehäuse 1 montiert ist und am Verriegelungsorgan 15 anliegt. Das Verriegelungsorgan 15 ist als Kniehebel ausgebildet, wobei der eine Hebelarm am Betätigungsorgan 17 anliegt und der andere Hebelarm einen Abschnitt 19 aufweist, der mit der Verzahnung 14 des Verstellsegmentes 13 in und ausser Eingriff bringbar ist. Um eine unbeabsichtigte Verstellung zu vermeiden, ist ein Federelement vorgesehen, wodurch das Verriegelungsorgan 15 mit dem Abschnitt 19 mit der Verzahnung 14 in Eingriff gehalten wird. Zur Verstellung des Gehäuses 1 muss deshalb das Befestigungsorgan 17 eingedrückt werden, um den Kniehebel 15 gegen die Kraft des Federelementes 20 zu verschwenken und den Abschnitt 19 aus der Verzahnung herausheben.

An der Einblicköffnung 2 ist eine Lupe 21 angeordnet, die durch einen Lupenhalter 22 am Gehäuse 1 gehalten wird. An der Aussenseite der Einblicköffnung 2 ist ein Halter 23 für einen nicht dargestellten Einblickschacht vorgesehen. In diesem Zusammenhang wird darauf hingewiesen, dass die Spiegelreflex-Einrichtung auch ohne eine solche Lupe 21 benutzt werden kann.

## Patentansprüche

1. Spiegelreflex-Einrichtung zum Betrachten der Mattscheibe im Bildträger einer photographischen Kamera, die relativ zueinander verstellbare Objektiv- und Bildträger aufweist, mit einem Gehäuse (1), das eine dem Betrachter zugewandte Einblicksöffnung (2) und eine ringsum durch Randabschnitte (8) des Gehäuses bestimmte, der Mattscheibe zugewandte Lichteintrittsöffnung (3) aufweist, sowie einen von beiden Oeffnungen aus sichtbaren Spiegel (4) innerhalb des Gehäuses (1) dadurch gekennzeichnet, dass der Spiegel (4) an einer den beiden Oeffnungen (2, 3) gegenüberlegenden Wandung des Gehäuses (1) fest montiert ist und ein am Bildträger montierbarer Halterrahmen (6) vorhanden ist, sowie ein an den Randabschnitten (8) befestigter Balg (7), der das Gehäuse (1) an der Lichteintrittsöffnung (3) mit dem Halterrahmen (6) lichtdicht und beweglich verbindet.

2. Einrichtung nach Anspruch 1, dadurch gekennzeichnet, dass das Gehäuse (1) um eine zur Mattscheibe parallelen Schwenkachse (11) schwenkbar ist, die nahe eines Randes der Mattscheibe am Bildträger angeordnet ist.

3. Einrichtung nach Anspruch 1 oder 2, dadurch gekennzeichnet, dass der Halterrahmen (6) auf den Bildträger aufsteckbar ist.

4. Einrichtung nach Anspruch 3, dadurch gekennzeichnet, dass das Gehäuse (1) über eine Scharniervorrichtung (5) mit dem Halterrahmen verbunden ist.

5. Einrichtung nach Anspruch 1, dadurch gekennzeichnet, dass mindestens eine Verstellvorrichtung (12) vorgesehen ist, um das Gehäuse (1) mit dem Spiegel (4) in eine Mehrzahlvon verschiedenen Schwenkstellungen einzustellen.

6. Einrichtung nach Anspruch 4 und 5, dadurch gekennzeichnet, dass die Scharniervorrichtung (5) und die Verstellvorrichtung (12) innerhalb des Balges (7) angeordnet sind.

7. Einrichtung nach Anspruch 5, dadurch gekennzeichnet, dass die Verstellvorrichtung (12) ein Verstellsegment (13), das am Halterrahmen (6) befestigt ist und eine Verzahnung (14) aufweist, ein Verriegelungsorgan (15), das am Gehäuse (1) schwenkbar angeordnet und mit der Verzahnung (14) des Verstellsegmentes in und ausser Eingriff bringbar ist, und ein Entriegelungsorgan (17) aufweist, das an der Aussenseite des Gehäuses (1) angeordnet ist und am Verriegelungsorgan (15) anliegt wobei das Verriegelungsorgan (15) durch ein elastisches Element (20) mit dem Verstellsegment (13) in Eingriff gehalten wird.

## Claims

1. Reflex device for inspecting of the ground glass on an image carrier of a photographic camera including objectiv carier and image carrier relatively adjustable, which device having a housing (1) comprising a inspecting opening (2) turned to the spectator and a light admission opening (3) determined on all sides by marginal portions (8) as well as a mirror (4) within the housing, which mirror is visible from both openings characterized in that the mirror (4) is fixedly mounted on a wall of the housing opposite to one of both openings and a mounting frame (6) is provided, which frame mountable to the image carrier, as well as a bellow (7) fixed to the marginal portions (8), which bellow connects lighttightly and movably the housing on the light admission opening with the mounting frame (6).

2. Device according to claim 1 characterizid in that the housing is pivotable around an axis of rotation (11), which is parallel to the groun glass and which is arranged near a margin of the ground glass.

3. Device according to claim 1 or 2 characterized in that the mounting frame (6) is attachable on the image carrier.

4. Device according to claim 3 characterized in that the housing (1) is connected with the mounting frame by way of a hinge.

5. Device according to claim 1 characterized in that an adjusting device (12) is provided in order to adjust the housing (1) with the mirror (4) into a plurality of swing positions.

6. Device according to claim 4 or 5 characterized in that hinge device (5) and adjusting device (12) are arranged within the bellow (7).

7. Device according to claim 5 characterized in that the adjusting device (12) includes an adjusting segment (13), which is fixed to the mounting frame and which is provided with a tooth construction (14), a locking member (15), which is mounted pivotably on the housing (1) and which is throwable into and out of gear with the tooth construction (14) of the adjusting construction (14) arid an unlocking device (17) which is mounted outside of the housing (1) and which abutts to the locking member (11), said locking member (15) is in engagement with the adjusting segment (13) by means of an elastic means (20).

## Revendications

1. Dispositif reflex pour l'observation du verre dépoli du porteur d'image d'une caméra photographique, caractérisé par des porteurs d'objectifs et d'images mobiles l'un par rapport à l'autre, comportant un boîtier (1), une ouverture d'observation dirigée contre l'observateur (2), et une lunette d'entrée de lumière (3), dirigée contre le verre dépoli et limitée par des segments d'extrémité (8) du boîtier, ainsi qu'un miroir (4) visible depuis les deux ouvertures, placé à l'intérieur du boîtier (1), caractérisé de par le fait que le miroir (4) est fixé d'une part sur la face du boîtier (1) situé à l'opposé des ouvertures (2,3) et d'autre part à un profil de montage (6) installé sur le porteur d'image, ainsi qu'un soufflet (7) fixé aux segments d'extrémité (8) qui relie le boîtier (1) à la lunette d'accès de lumière (3) et au profil de fixation (6) d'une façon flexible et inaccessible à la lumière.

2. Dispositif selon la prétention 1, caractérisé de par le fait que le boîtier (1) est orientable autour d'un axe (11) parallèle au verre dépoli, fixé à proximité d'un bord du verre dépoli, sur le porteur d'image.

3. Dispositif selon la prétention 1 ou 2, caractérisé de par le fait que le profil de fixation (6) est enfichable sur le porteur d'image.

4. Dispositif selon la prétention 3, caractérisé de par le fait que le boîtier (1) est relié au profil de fixation avec une charnière (5).

5. Dispositif selon la prétention 1 caractérisé de par le fait qu'au minimum un dispositif de réglage (12) est prévu pour permettre l'orientation du boîtier (1) et du miroir (4) dans un nombre varié de positions.

6. Dispositif selon la prétention 4 et 5 , caractérisé de par le fait que la charnière (5) et le dispositif de réglage (12) sont disposés à l'intérieur du soufflet (7).

7. Dispositif selon la prétention 5, caractérisé de par le fait que le dispositif de réglage (12) comporte un segment de réglage (13) denté, qui est fixé au profil de fixation (6), le dispositif de blocage (15), qui est fixé d'une manière orientable par rapport au boîtier (1), et qui peut être relié avec ou détaché de la denture (14) du segment de réglage, pour permettre son action, et qui de plus est équipé d'un organe de déblocage (17), fixé sur la partie extérieur du boîtier, contre l'organe de blocage (15), l'organe de blocage (15) est maintenu en position de fonctionnement avec le segment de réglage (13) par l'intermédiaire d'un élément élastique (20).
